# EUROPÄISCHE PATENTSCHRIFT

(11) **EP 1 115 636 B1**
(45) Veröffentlichungstag und Bekanntmachung des Hinweises auf die Patenterteilung: **17.07.2002**
(21) Anmeldenummer: 99948901.6
(22) Anmeldetag: 29.09.1999
(51) Int. Cl.: B65G 1/04, B07C 3/08

(54) **VERFAHREN UND VORRICHTUNG ZUM ZUFÜHREN, POSITIONIEREN, SPEICHERN UND/ODER AUSTAUSCH VON BEHÄLTERN**
METHOD AND DEVICE FOR SUPPLYING, POSITIONING, STORING AND/OR CHANGING CONTAINERS
PROCEDE ET DISPOSITIF POUR ALIMENTER, POSITIONNER, STOCKER ET/OU REMPLACER DES RECIPIENTS

(30) Priorität: 29.09.1998 DE 19844763
(43) Veröffentlichungstag der Anmeldung: 18.07.2001
(73) Patentinhaber: Mechanik Center Erlangen GmbH, 91058 Erlangen (DE)
(72) Erfinder: PFÖRTNER, Helmut, D-91085 Weisendorf (DE); KOLB, Roland, D-91334 Hemhofen (DE)
(74) Vertreter: Berg, Peter
(86) Internationale Anmeldenummer: EP9907231
(87) Internationale Veröffentlichungsnummer: WO0018666

(56) Entgegenhaltungen:
- EP-A- 0 640 409
- EP-A- 0 774 303

## Beschreibung

Die Erfindung bezieht sich auf Verfahren zum Zuführen, Positionieren, Speichern und/oder Austauschen von Behältern gemäß Oberbegriff des Anspruchs 1. Daneben bezieht sich die Erfindung auf eine Vorrichtung zum Zuführen, Positionieren, Speichern und/oder Austauschen von Behältern gemäß Oberbegriff des Anspruchs 9.

Ein derartiges Verfahren und eine derartige Vorrichtung sind z.B. durch die EP 0 640 409 A2 bekannt. Im bekannten Fall werden die Leerbehälter quer zur Verfahrbahn der Aktivbehälter zugeführt.

Insbesondere bei Postgutsortieranlagen muß ein Zuführen, Puffern oder auch Verteilen von Behältern, die zur Aufnahme von Postgut vorgesehen sind, an den Endstellen von diesbezüglichen Sortiermaschinen erfolgen. Dies bedeutet im einzelnen, daß beispielsweise mehr als hundert Behälter gleichzeitig den entsprechenden Endstellen zugeführt sein müssen, wozu sie beispielsweise im Raster von 360 mm positioniert und hinter den in Befüllposition bereits befindlichen Behältern bereitgestellt werden. Die Behälter dürfen hierbei keinesfalls auf Block gefördert werden, sondern müssen wie im vorliegenden Fall auf Raster 360 mm mit 40 mm Abstand zum jeweils nächsten Behälter gefördert werden.

Wenn letztere Behälter aufgefüllt sind, muß ein schneller Austausch der Behälter erfolgen können. Jede im Leerbehälterstrang durch einen Behälterwechsel entstehende Lücke, z.B. durch seitliches Abschieben eines Behälters, muß innerhalb eines kurzen Zeitintervalls, beispielsweise von ca. 1,5 s, geschlossen sein. Mehrere willkürlich entstehende Lücken, z.B. zeitgleich entstehende oder an unterschiedlichen Stellen entstehende Lücken, müssen innerhalb eines sehr kurzen Zeitraumes geschlossen werden. Hinter der Reihe der Aktivbehälter im vorgegebenen Raster muß eine komplette Reihe Leerbehälter im gleichen Raster stehen.

Letzterer Vorgang erfolgte bisher manuell durch Zuführen und Verteilen der Leerbehälter durch das Bedienpersonal der Postgutsortieranlage.

Demgegenüber ist es Aufgabe der Erfindung, ein Verfahren anzugeben und ein zugehöriges Positioniersystem zu schaffen, mit denen Behälter automatisiert befördert werden können. Die beinhaltet im einzelnen, daß Behälter zugeführt, zwischengespeichert - d.h. gepuffert -, positioniert und ausgetauscht werden.

Die Aufgabe ist erfindungsgemäß bezüglich des Verfahrens durch Patentanspruch 1 gelöst. Bei einer Vorrichtung der eingangs genannten Art ist die Aufgabe dadurch gelöst, daß die Verschiebeeinrichtung als Taktschiene aus in der Länge begrenzten Schienen gebildet wird, die getaktet verschoben werden und die jeweils in der Höhe individuell verstellbare Mitnehmer für die Behälter aufweisen.

Bei der Erfindung werden in Abweichung zum Stand der Technik mehrere Taktschienen mit einer vorgegebenen Gesamtlänge in Längsrichtung gekoppelt, die der jeweiligen Anzahl von Endstellen angepaßt ist, über ein Schrittschaltgetriebe, beispielsweise mit 360 mm Hub, beim Vorwärtshub gezogen und beim Rückwärtshub um den gleichen Betrag, beispielsweise um 360 mm, zurückgeschoben. Die Leerbehälter werden am Anfang der Anlage über einen Lift an die Taktschiene übergeben. Vorteilhaft ist dabei insbesondere, daß die aktiv schaltbaren Mitnehmer auf den Taktschienen die Leerbehälter bei jedem Vorwärtshub der Schiene um eine Rastereinheit nach vorne ziehen. Die Behälter werden durch spezifische Mitnehmerköpfe gleichzeitig in Längsrichtung geführt. Eine zusätzliche Seitenführung ist dadurch nicht notwendig. Der Mitnehmerkopf gewährleistet vielmehr ein paralleles Führen der Behälter.

Für die Leerbehälter, die nicht weitertransportiert werden sollen, bleiben die Mitnehmer dagegen eingezogen. Somit bleiben die entsprechenden Leerbehälter in ihrer Position stehen.

Durch die erfindungsgemäße Vorrichtung kann in vorteilhafter Weise jede durch Wegschieben der Leerbehälter entstehende Behälterlücke innerhalb der Zykluszeit der Taktschienen geschlossen werden. Bei leeren Taktschienen, d.h. bei leeren Puffern, werden durch die entsprechende Ansteuerung der Mitnehmer die Leerbehälterplätze vor den Endstellen, d.h. vor der Behälterwechseleinrichtung, aufgefüllt.

Vorteilhaft ist bei der Erfindung weiterhin, daß anstelle der üblicherweise beim Stand der Technik verwendeten Einzelsegmentantriebe ein einziger Antrieb, beispielsweise ein Schrittschaltgetriebe, eingesetzt werden kann.

Weitere Einzelheiten und Vorteile der Erfindung ergeben sich aus der nachfolgenden Figurenbeschreibung von Ausführungsbeispielen anhand der Zeichnung in Verbindung mit den weiteren Unteransprüchen. Es zeigen in jeweils schematischer Darstellung
- Figur 1: eine Prinzipdarstellung der gesamten Anlage,
- Figur 2: eine Seitenansicht von Figur 1 zur Verdeutlichung einer dabei verwendeten Taktschiene,
- Figur 3: die Draufsicht auf die Taktschiene aus Figur 2 mit einzeln aktivierbaren Mitnehmern,
- Figur 4: eine seitliche Ansicht der Figur 2 zur Verdeutlichung des Mitnehmers,
- Figur 5: eine Seitenansicht einer bei Figur 1 verwendbaren Behälterwechseleinrichtung,
- Figur 6: die Draufsicht auf die Behälterwechseleinrichtung nach Figur 5 und
- Figur 7: eine Draufsicht auf den Antrieb der Wechseleinrichtung nach Figur 5 und Figur 6 mit darüberliegenden Behältern.

In den Figuren haben gleiche bzw. gleichwirkende Teile gleiche Bezugszeichen. Die Figuren werden nachfolgend teilweise gemeinsam beschrieben.

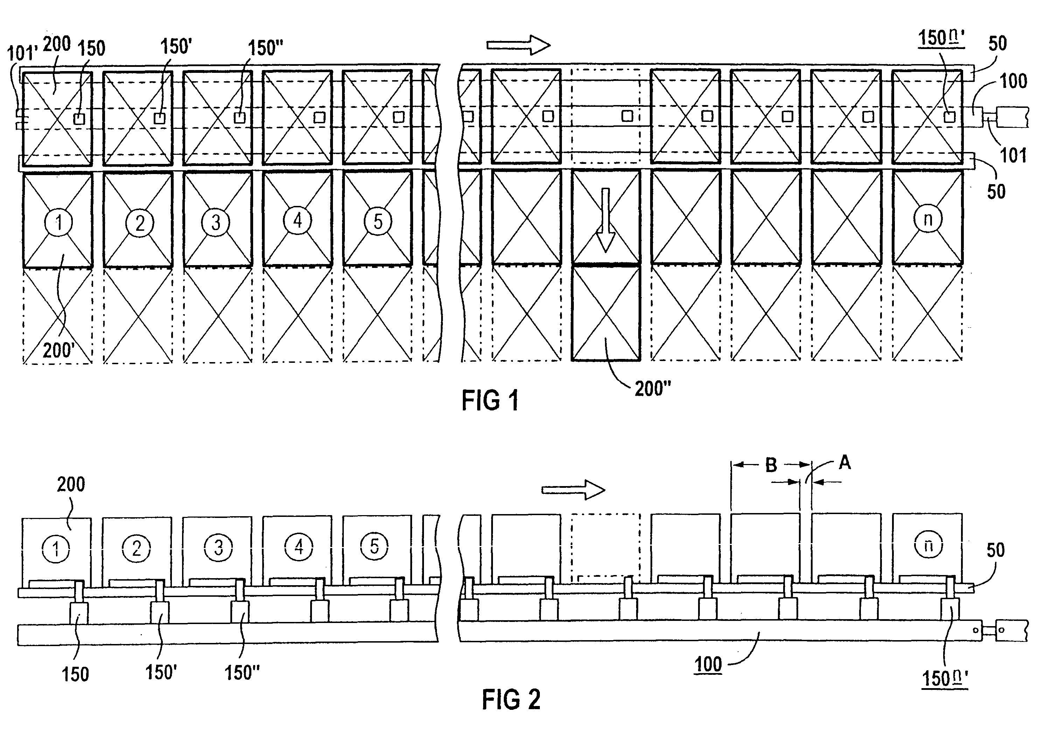

In Figur 1 ist in der Draufsicht und Figur 2 in der Seitenansicht das Prinzip einer Postgutsortieranlage dargestellt. Bei solchen Postgutsortieranlagen wird das Postgut nach Adressen geordnet und in Behältern, den sogenannten Aktivbehältern, von der Sortieranlage weggeführt. Dies bedeutet in der Praxis, daß gefüllte Behälter in unregelmäßigen Abständen durch Leerbehälter ersetzt werden müssen, da der Anfall von Postgut für unterschiedliche Behälter zeitlich variiert. Üblicherweise werden daher der in einer Verfahrbahn angeordneten Reihe von zu füllenden Behältern in Lateralrichtung eine Reihe von Leerbehältern zugeordnet. Diese Leerbehälter müssen die aufgefüllten Behälter jeweils ersetzen können, ohne daß der automatisierte Ablauf der Postgutsortieranlage gestoppt wird.

Letzteres bedeutet, daß mit Hilfe einer Behälterwechseleinrichtung der gefüllte Aktivbehälter mit dem Leerbehälter getauscht werden muß. Dazu wird der gefüllte Aktivbehälter aus der Befüllposition nach außen geschoben und der Leerbehälter nachgeschoben. Der nachgeschobene Leerbehälter wird anschließend durch einen Fixierbolzen in Befüllposition gehalten.

Wesentlich ist, daß zwei Reihen von Behältern vorhanden sind. Eine erste Reihe mit Aktivbehältern zur Aufnahme des Postgutes und eine zweite Reihe mit Leerbehältern, wobei die einzelnen Behälter in der zugehörigen Reihe einerseits und gegenüber dem jeweiligen Behälter in der anderen Reihe andererseits exakt einen Abstand A einhalten.

Die Längsbewegung der Leerhälter erfolgt mit einer Taktschiene 100. Diese weiter unten im einzelnen beschriebenen Taktschienen haben aktiv steuerbare Mitnehmer mit Zentrierkopf für die Behälter, wobei die Behälter selbst auf Gleitschienen oder auf Transportrollen getragen werden.

Eine Verschiebeeinheit besteht beispielsweise aus zwei bis sechs Taktschienen 100 gemäß Figur 1, Figur 3 und Figur 4, die mit Führungen ausgestattet sind und weitestgehend baugleich sind. Bei einer einzelnen Taktschiene bedeutet 101 eine Kupplung, 102 eine sogenannte C-Schiene, 103 ein Tragrollensatz, 104 ein Führungsrollensatz, 105 ein Mitnehmerzylinder, 106 ein Mitnehmerkopf, 107 eine Ventilinsel, 108 ein Ventil für Steuerluft, 109 ein Kabelkanal, 110 ein Träger und 111 ein Elektronikmodul.

Auf der Taktschiene 100 mit einer Länge von beispielsweise 2150mm befindet sich in regelmäßigem Rasterabstand B, beispielsweise 360mm, jeweils ein Mitnehmer 150, 150', 150'',... Jeder Mitnehmer 150 ist im einzelnen durch einen pneumatisch versorgten Mitnehmerzylinder 105 gebildet, auf dem oben ein zugehöriger Mitnehmerkopf 106 aufsitzt. Der Mitnehmerkopf 106 ist gabelartig zum Eingriff in ein Gegenprofil ausgeformt, das üblicherweise bei Postgutbehältern an der Unterseite der Bodenfläche angebracht ist.

Beispielsweise sind in Figur 1 auf der Taktschiene 100 Mitnehmer 150, 150', 150'' ... in periodischem Abstand aufgebracht. Die Taktschiene 100 hat am vorderen Ende eine Kupplung 101 und am rückseitigen Ende einen Eingriff 101'. Die Schiene selbst ist als C-Schiene mit der offenen Seite nach unten ausgebildet und läuft auf Trag- und Führungsrollen, die jeweils den Tragrollensatz 103 und den Führungsrollensatz 104 bilden und zur Aufnahme der statischen und dynamischen Gewichtsbelastung und der Momentenbelastung durch die Mitnehmer 150 dienen.

Bei einer bekannten Postgutsortieranlage ist der Rasterabstand für die einzelnen Behälter beispielsweise 360 mm. In diesem Abstand sind die pneumatischen Mitnehmerzylinder 105 angeordnet. Dabei sitzen die Mitnehmerköpfe 106 jeweils auf einer Kopfplatte der jeweiligen Mitnehmerzylinder 105.

In der Ruhestellung der Anlage, insbesondere auch bei Notfällen, sind die Mitnehmerzylinder 105 durch eine darin integrierte Druckfeder ausgefahren. Die kompletten Mitnehmer 150, 150', ... bleiben dadurch am Behälterboden im Eingriff. Die Ansteuerung der jeweiligen Mitnehmerzylinder 105 erfolgt von den diesen zugeordneten Ventilinseln 107. Letztere bestehen jeweils aus einzelnen 3/2-Wegeventilen.

Zur Steuerluftzuleitung der Ventilinseln 107 ist in jeder Schiene ein Ventil für die Absperrung und schnelle Entlüftung des Betriebsdrucks aus der Ventilinsel für einen Notausschaltbetrieb eingebaut. Die eingefahrene Endstellung der Mitnehmerzylinder 105 wird durch je einen, in den Figuren nicht dargestellten Schalter überwacht, wofür beispielsweise ein Reed-Kontaktschalter geeignet ist.

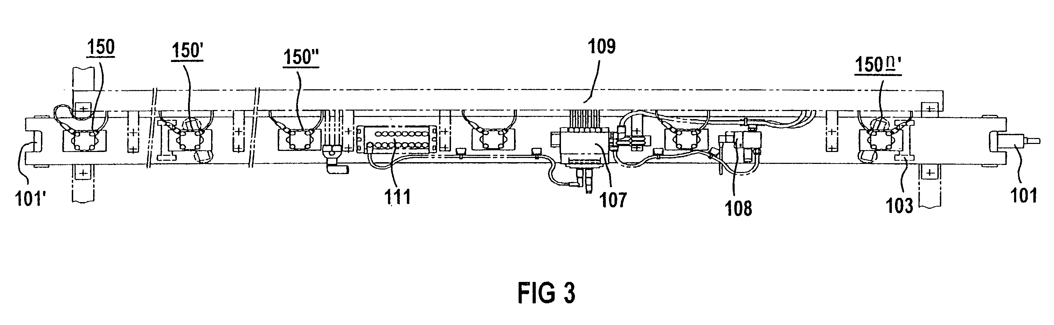

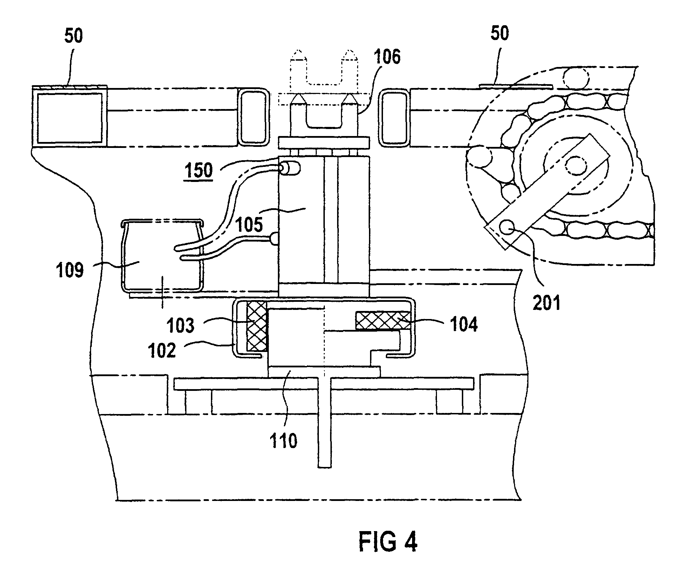

Mit der anhand der Figuren 3 und 4 beschriebenen Einrichtung ist ein Behälter-Positioniersystem geschaffen, mit dem in einfacher Weise bei der Postgutsortieranlage gemäß Figur 1/2 deren Endstellen mit Leerbehältern versorgt werden. Für Postgut geeignete Behälter, auf die im vorliegenden Zusammenhang nicht weiter eingegangen wird, haben auf der Unterseite einen sogenannten Wabenboden mit Strukturen zum Eingriff externer mechanischer Elemente, wie beispielsweise des Mitnehmerkopfes eines einzelnen Mitnehmers 150. Dadurch ist ein automatisiertes 'Handling' derartiger Behälter möglich.

Im einzelnen wird einerseits jeweils ein Leerbehälter hinter jeder Endstelle gepuffert und andererseits der Leerbehälter auf die jeweiligen Endstellen verteilt. Dazu wird die komplette Taktschiene 100 über das Schrittschaltgetriebe mit Hub 360 mm beim Vorwärtshub gezogen und beim Rückwärtshub um 360 mm zurückgeschoben. Die Leerbehälter werden am Ende der Anlage über einen Lift an die Taktschiene 100 übergeben. Über die aktiv schaltbaren Mitnehmer 150 auf der Taktschiene 100 werden die Leerbehälter, die in den Figuren nicht dargestellt sind, bei jedem Vorwärtszug der Schiene um eine Rastereinheit nach vorne gezogen. Die Leerbehälter gleiten dazu auf zwei Gleitschienen 50 in die Bereitstellpositionen. Für diejenigen Leerbehälter, die nicht weitertransportiert werden sollen, bleiben die Mitnehmer 150 eingezogen, wodurch die entsprechenden Leerbehälter stehenbleiben.

Durch vorstehend beschriebene Anordnung kann jede im Endstellenbereich entstehende Leerbehälterlücke innerhalb der Zykluszeit der Taktschiene 100 geschlossen werden. Damit ist es möglich, einerseits Leerbehälter zu puffern, wozu bei leeren Taktschienen, d.h. bei leeren Puffern, durch eine entsprechende Anzahl der Hübe der Taktschiene 100 und durch eine entsprechende Ansteuerung der Mitnehmer 150 die Plätze vor den Endstellen, d.h. vor der Behälterwechseleinrichtung, mit Leerbehältern aufgefüllt werden.

Wird ein beliebiger Leerbehälter durch die Behälterwechseleinrichtung abgezogen, entsteht eine Lücke im Leerbehälterpuffer. Wiederum kann jede entstehende Lücke innerhalb der Zykluszeit der Taktschiene 100 und der Aufeinanderfolge der Mitnehmer 150, 150', 150'' ... durch eine entsprechende Ansteuerung jedes einzelnen Mitnehmers 150 geschlossen werden.

Der Verschiebeeinrichtung ist eine Antriebseinheit zugeordnet. Diese besteht aus einem Schrittschaltgetriebe in Kombination mit einem Schubkurbelgetriebe, das die Führungsplatte um einen entsprechenden Hub verschiebt. Über eine Ausgleichskupplung ist letztere mit der Schiene 100 verbunden.

Mit einer solchen Anordnung werden Querkräfte hinreichend eliminiert und erfolgt eine ruckfreie Verschiebung der Taktschienen. An der Eingangswelle des Schrittschaltgetriebes sitzt ein Schneckengetriebemotor.

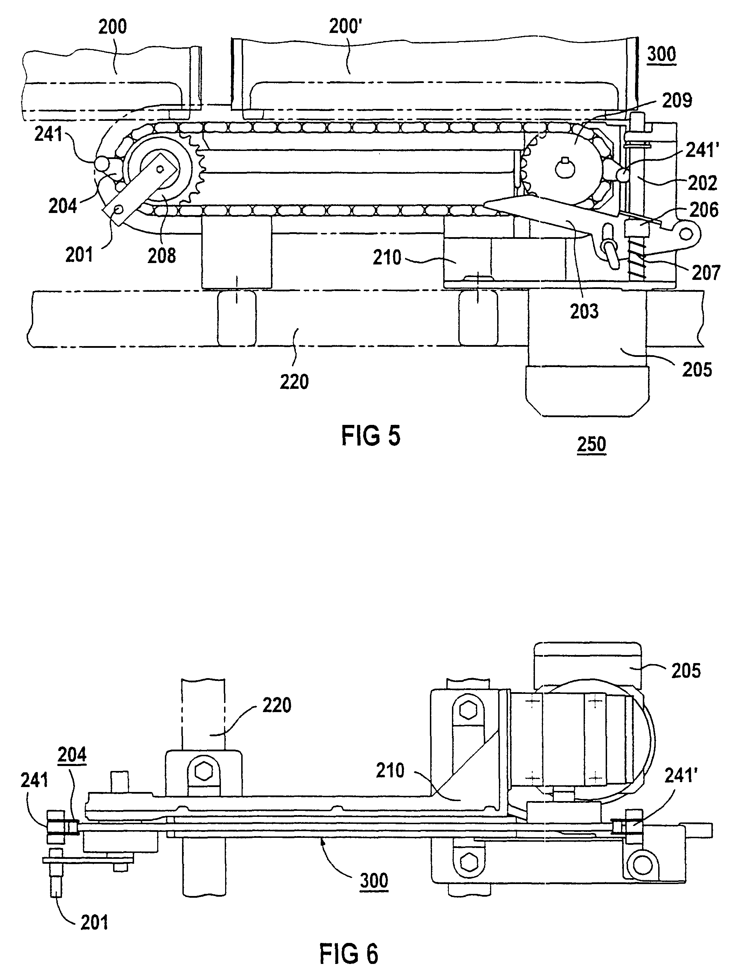

Gemäß Figur 5 ist ein Kettentrieb 300 vorhanden, der im wesentlichen aus der über Ritzel geführten Kette besteht. Im einzelnen sind in Figur 5 zwei Ritzel ersichtlich, und zwar ein Kettenritzel 208 und ein Antriebsritzel 209. Das Antriebsritzel 209 ist mit einem Antrieb 250 in Wirkverbindung. Insbesondere ist in der Figur 5 ein Getriebemotor 205 erkennbar, mit dem über das nicht im einzelnen dargestellte Getriebe das Antriebsritzel 209 angetrieben und damit die Kette bewegt wird.

Die umlaufende Kette ist in Figur 5 mit 204 bezeichnet. Sie weist jeweils mitlaufende Mitnehmer 241, 241',... auf. Beim Betrieb verändert der jeweilige Mitnehmer 241 seine relative Lage und greift bei der Horizontalbewegung der Kette 204 beispielsweise von unten in den Wabenboden eines an diesem Ort befindlichen Behälters ein. Durch das Eingreifen des Mitnehmers 241 in den Wabenboden wird ein Leerbehälter aus einer Bereitstellungsposition gegen einen in Figur 5 gefüllten Behälter 200' gezogen. Anschließend kann unmittelbar ein Austausch der Behälter erfolgen.

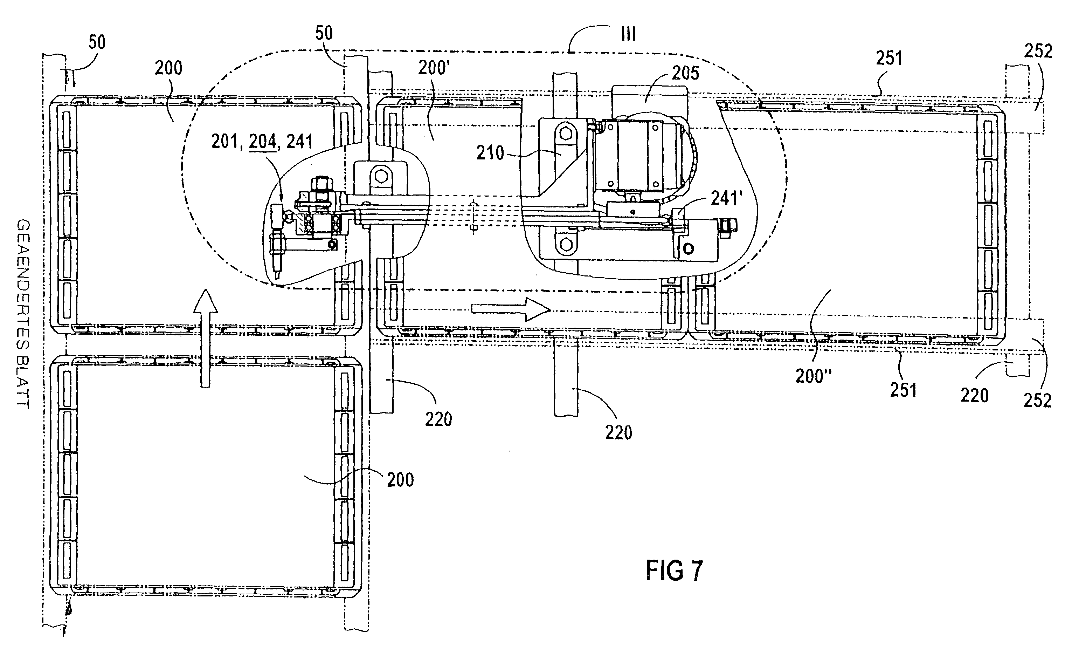

In Figur 7 ist weiterhin auf der Antriebsseite der Verfahrbahn ein Gestell 210 ersichtlich, das zur Positionierung der Vorrichtung auf dem Grundrahmen 220 dient. Auf dem Gestell 210 sind Gleitschienen 252 mit Seitenführungen 251 zur Aufnahme der Behälter vorhanden.

In den Figuren 4, 5 und 6 ist ein um die Kettenritzelachse 208 verstellbar angeordneter Signalgeber 201 vorhanden, der durch die rollengelagerten Mitnehmer 241 betätigt wird. Sein Anschlag 202 ist zur Signalgabe vorgegeben. Weiterhin ist ein Fixierbolzen 202 vorhanden, der über eine Wippe 203 eingezogen wird. Über eine Hülse 206 läßt sich mit einer zugehörigen Druckfeder eine geeignete Position der Wippe 203 einstellen bzw. die Ausfahrkraft des Fixierbolzens 202 als Anschlag variieren.

Auf der der Antriebsseite gegenüberliegenden Seite der Verfahrbahn der Kette 204 befindet sich ein Elektroschalter 201 zum Abschalten bei Erreichen der vorgegebenen Positionierung. Speziell in Figur 7 ist die Abschaltposition dargestellt.

Mit der dargestellten Vorrichtung kann der automatisierte Austausch von Behältern erfolgen. Bei gefülltem Behälter 200' startet die Füllstandsüberwachung eines Sorters den Kettenantrieb 205 der in den Figuren 5, 6 und 7 mit Einzelheiten dargestellte Behälterwechseleinrichtung.

In Figur 5 und 6 ist die Behälterwechseleinrichtung für Behälter 200, 200', dargestellt. Die Leerbehälter 200 werden in Linearrichtung bewegt und in Querrichtung dazu mit einem gefüllten Behälter als Aktivbehälter 200'ausgetauscht, wobei über eine nicht dargestellte Steuereinrichtung der Austausch bewirkt wird. Dazu werden die Mitnehmer 241 und 241' im Kettentrieb 204 aktiviert.

Mit Aktivierung greift der diesbezügliche Mitnehmer 241 auf der Kette 204 von unten in den Wabenboden des Leerbehälters, der sich auf dem Leerbehälter-Positioniersystem befindet, und schiebt diesen gegen den gefüllten Behälter in der Befüllposition. Dazu sind die Mitnehmer 241, 241' in Abhängigkeit von der Wabenstruktur des Behälters 200 möglichst breit ausgebildet und sind die Mitnehmer 241, 241' vorteilhafterweise rollengelagert. Ein anderer Mitnehmer 241' auf der Kette 204 zieht zeitgleich über die Wippe den Fixierbolzen für den gefüllten Behälter nach unten.

Mit dem Leerbehälter 200 wird der Aktivbehälter 200' kontinuierlich nach außen geschoben, bis der Mitnehmer 241' über den Endschalter 201 den Kettenantrieb 204 abschaltet. Der Aktivbehälter 200' wird so als Vollbehälter 200'' ausgeschleust. Gleichzeitig federt der Fixierbolzen 202 nach oben und sichert den Leerbehälter 200' in der Befüllstation während des Befüllens.

Bei der beschriebenen Behälterwechseleinrichtung führt der Antrieb durch die spezifische Anordnung von mehreren Mitnehmern keinen kompletten Umlauf aus. Beim Umlauf der Mitnehmer 241, 241' drückt je ein Mitnehmer einen Leerbehälter 200 gegen einen Aktivbehälter 200' und wechselt somit den Aktivbehälter 200' "fliegend" gegen den Leerbehälter, ohne daß der automatische Ablauf der Postgutsortieranlage gestoppt wird.

Die im Rahmen vorliegender Erfindung verwendete Behälterwechseleinrichtung stellt ein eigenständiges Arbeitsmodul dar, das - wie vorstehend beschrieben - beispielsweise als zusätzliche Funktionseinheit im Endstellenbereich einer Postgutsortiereinrichtung integrierbar ist und mit weiteren Arbeitsmodulen in Wirkverbindung stehen kann.

## Patentansprüche

1. Verfahren zum Zuführen, Positionieren, Speichern und/oder Austauschen von Behältern, wobei Aufnahmebehälter als Aktivbehälter und Leerbehälter vorhanden sind und jedem Aktivbehälter wenigstens ein Leerbehälter zum Austausch zugeordnet wird, **dadurch gekennzeichnet, daß** zur Aufnahme von Postgut oder dergleichen eine Anzahl von Leerbehältern hintereinander im vorgegebenen Rasterabstand (B) der Aktivbehälter in einer Verfahrbahn angeordnet sind, wobei die Leerbehälter automatisch im Rasterabstand (B) verschoben werden.

2. Verfahren nach Anspruch 1, **dadurch gekennzeichnet, daß** gleichzeitig beliebig viele Leerbehälter quer zur Verfahrbahn "fliegend" gegen die Aktivbehälter ausgetauscht werden.

3. Verfahren nach Anspruch 2, **dadurch gekennzeichnet, daß** ein erster Behälter, z.B. ein voller Behälter, in Querrichtung zur Verfahrbahn lösbar fixiert ist, bei Berühren von einem zweiten Behälter, z.B. einem leeren Behälter, die Fixierung gelöst wird solange, bis der zweite Behälter die Position des ersten Behälters eingenommen hat.

4. Verfahren nach Anspruch 3, **dadurch gekennzeichnet, daß** die Fixierung des zweiten Behälters nach dem Positionswechsel in Abhängigkeit von der Behälterlänge selbsttätig ausgeführt wird.

5. Verfahren nach Anspruch 4, **dadurch gekennzeichnet, daß** ein Antrieb (250) für die Behälterwechseleinrichtung nach Erreichen einer Endposition durch einen Signalgeber (201) selbsttätig abschaltet.

6. Verfahren nach Anspruch 5, **dadurch gekennzeichnet, daß** der Antrieb (250) wenigstens eine Kette (204) umfaßt und die Kette (204) durch die Anordnung von mehreren Mitnehmern (241, 241'), vorzugsweise von zwei Mitnehmern, keinen kompletten Umlauf, vorzugsweise einen halben Umlauf, ausführt.

7. Verfahren nach Anspruch 6, **dadurch gekennzeichnet, daß** beim Umlauf der Mitnehmer je ein Mitnehmer (241) einen Leerbehälter gegen einen Aktivbehälter schiebt und somit den Aktivbehälter "fliegend" gegen den Leerbehälter wechselt, ohne daß der automatische Ablauf der Postgutsortieranlage gestoppt wird.

8. Verfahren nach Anspruch 7, **dadurch gekennzeichnet, daß** beim Wechsel ein weiterer Mitnehmer (241') zeitgleich über eine Wippe (202) einen Fixierbolzen nach unten wegzieht, und dadurch den gefüllten Behälter (200') zum Ausschieben freigibt, und daß der weitere Mitnehmer (241') nach dem Überfahren der Wippe (203) den Fixierbolzen (202) zum erneuten Absperren freigibt, nachdem der Behälter (200') den Fixierbolzen (202) überfahren hat, wobei der weitere Mitnehmer (241') ein Schaltelement (201) betätigt.

9. Vorrichtung zum Zuführen, Positionieren, Speichern und/oder Austauschen von Behältern, wobei Aufnahmebehälter als Aktivbehälter und Leerbehälter vorhanden sind und jedem Aktivbehälter wenigstens ein Leerbehälter zum Austausch zugeordnet ist, **dadurch gekennzeichnet, daß** zur Aufnahme von Postgut oder dergleichen eine Anzahl von Leerbehältern hintereinander im vorgegebenen Rasterabstand (B) der Aktivbehälter in einer Verfahrbahn angeordnet sind, wobei die Leerbehälter automatisch im Rasterabstand (B) verschiebbar sind.

10. Vorrichtung nach Anspruch 9, **dadurch gekennzeichnet, daß** wenigstens eine Taktschiene vorhanden ist, wobei die Taktschiene aus in der Länge begrenzten Schienen (100), die getaktet verschoben werden und die in der Höhe verstellbare Mitnehmer (150, 150', 150'') für die Behälter aufweisen, gebildet wird.

11. Vorrichtung nach Anspruch 10, **dadurch gekennzeichnet, daß** jede Schiene (100) eine vorgegebene Anzahl von verstellbaren Mitnehmern (150, 150', 150'') zum Transport von entsprechend vielen Behältern aufweist.

12. Vorrichtung nach Anspruch 10, **dadurch gekennzeichnet, daß** ein Antrieb, vorzugsweise ein Schrittschaltgetriebe, zur ruckfreien Verschiebung der Taktschiene (100) vorhanden ist.

13. Vorrichtung nach Anspruch 10, **dadurch gekennzeichnet, daß** die Schienen (100) eine nach unten offene Form haben und durch kunststoffumspritzte Rollen horizontal und seitlich geführt sind.

14. Vorrichtung nach Anspruch 10, **dadurch gekennzeichnet, daß** sämtliche Mitnehmer (150, 150', 150'') einzeln und individuell ansteuerbar sind.

15. Vorrichtung nach Anspruch 10, **dadurch gekennzeichnet, daß** sämtliche Mitnehmer (150, 150', 150'') bei Maschinenhalt, bei Not-Aus und im spannungslosen Zustand der Anlage im Eingriff bleiben.

16. Vorrichtung nach Anspruch 9, **dadurch gekennzeichnet, daß** zur Fixierung des Behälters (200, 200', ...) ein in Höhenrichtung verstellbarer Fixierbolzen (202) vorhanden ist, der durch eine Hülse (206) über die Wippe (203) nach unten wegziehbar ist und nach dem Freigeben der Wippe (203) durch einen weiteren Mitnehmer (241') durch ein Federsystem (207) selbsttätig erneut ausfahrbar ist.

17. Vorrichtung nach Anspruch 16, **dadurch gekennzeichnet, daß** für den Austausch der Behälter (200, 200', ...) in Querrichtung der Verfahrbahn eine Kette (204) mit Mitnehmern (241, 241') für die Behälter (200) vorhanden ist.

18. Vorrichtung nach Anspruch 17, **dadurch gekennzeichnet, daß** für den Betrieb der Kette (204) und das Einfahren sowie das Ausfahren des Fixierbolzens (202) ein einziger Antrieb (250, 205) vorhanden ist.

19. Vorrichtung nach Anspruch 18, **dadurch gekennzeichnet, daß** ein Schaltelement (201) für die Abschaltung des Antriebes (250, 205) vorhanden- ist.

20. Vorrichtung nach Anspruch 19, **dadurch gekennzeichnet, daß** der Antrieb (250) einen Getriebemotor (205) enthält.

21. Vorrichtung nach Anspruch 17, **dadurch gekennzeichnet, daß** die Mitnehmer (241, 241') in Abhängigkeit von der Wabenstruktur des Behälters (200) möglichst breit ausgebildet sind.

22. Vorrichtung nach Anspruch 21, **dadurch gekennzeichnet, daß** die Mitnehmer (241, 241') rollengelagert sind.

## Claims

1. Method of feeding, positioning, storing and/or exchanging containers, accommodating containers being provided as active containers and empty containers and each active container being assigned at least one empty container for exchange purposes, **characterized in that**, for accommodating mail or the like, a number of empty containers are arranged one behind the other at the predetermined unit spacing (B) of the active containers in a displacement track, the empty containers being automatically displaced by the unit spacing (B).

2. Method according to Claim 1, **characterized in that** any desired number of empty containers are simultaneously exchanged for the active containers in a "floating" manner in a direction transverse to the displacement track.

3. Method according to Claim 2, **characterized in that** a first container, e.g. a full container, is fixed releasably in a direction transverse to the displacement track and, on contact with a second container, e.g. an empty container, the fixing is released until the second container has assumed the position of the first container.

4. Method according to Claim 3, **characterized in that** there is automatic fixing of the second container following the change in position in dependence on the container length.

5. Method according to Claim 4, **characterized in that** a drive (250) for the container-changing arrangement automatically switches off once an end position has been reached by a signal generator (201).

6. Method according to Claim 5, **characterized in that** the drive (250) comprises at least one chain (204), and the chain (204), by the arrangement of a plurality of, preferably, two, carry-along elements (241, 241'), executes preferably half a circulatory cycle rather than a complete circulatory circle.

7. Method according to Claim 6, **characterized in that** during the circulation of the carry-along elements, in each case one carry-along element (241) pushes an empty container towards an active container and thus changes the active container for the empty container in a "floating" manner without the automatic sequence of the mail-sorting installation being stopped.

8. Method according to Claim 7, **characterized in that**, during the changeover, a further carry-along element (241') simultaneously draws a fixing bolt away downwards via a rocker (203) and thus releases the filled container (200') in order for the latter to be pushed out, and **in that**, following passage of the rocker (203), the further carry-along element (241') releases the fixing bolt (202) for renewed locking once the container (200') has passed over the fixing bolt (202), the further carry-along element (241') actuating a switching element (201).

9. Apparatus for feeding, positioning, storing and/or exchanging containers, accommodating containers being provided as active containers and empty containers and each active container being assigned at least one empty container for exchange purposes, **characterized in that** for accommodating mail or the like, a number of empty containers are arranged one behind the other at the predetermined unit spacing (B) of the active containers in a displacement track, it being possible for the empty containers to be automatically displaced by the unit spacing (B).

10. Apparatus according to Claim 9, **characterized in that** at least one stepped-interval rail is provided, the stepped-interval rail being formed from limited-length rails (100) which are displaced by stepped intervals and have height-adjustable carry-along elements (150, 150', 150'') for the containers.

11. Apparatus according to Claim 10, **characterized in that** each rail (100) is a predetermined number of adjustable carry-along elements (150, 150', 150'') for transporting a corresponding number of containers.

12. Apparatus according to Claim 10, **characterized in that** a drive, preferably a stepping mechanism, is provided for the smooth displacement of the stepped-interval rail (100).

13. Apparatus according to Claim 10, **characterized in that** the rails (100) are open in the downward direction and are guided horizontally and laterally by plastic-sheathed rollers.

14. Apparatus according to Claim 10, **characterized in that** all the carry-along elements (150, 150', 150'') can be activated individually.

15. Apparatus according to Claim 10, **characterized in that** all the carry-along elements (150, 150', 150'') remain in engagement when the machine stops, during emergency stoppage and in the deenergized state of the installation.

16. Apparatus according to Claim 9, **characterized in that** a fixing bolt (202) which can be adjusted in the vertical direction is provided for fixing the container (200, 200', etc.), it being possible for said fixing bolt to be drawn away downwards by a sleeve (206), via the rocker (203), and, following the release of the rocker (203), by way of a further carry-along element (241'), to be automatically extended again by a spring system (207).

17. Apparatus according to Claim 16, **characterized in that** a chain (204) with carry-along elements (241, 241') for the containers (200) is provided for exchanging the containers (200, 200', etc.), in the transverse direction of the displacement track.

18. Apparatus according to Claim 17, **characterized in that** a single drive (250, 205) is provided for operating the chain (204) and retracting and extending the fixing bolt (202).

19. Apparatus according to Claim 18, **characterized in that** a switching element (201) is provided for switching off the drive (250, 205).

20. Apparatus according to Claim 19, **characterized in that** the drive (250) contains a gear motor (205).

21. Apparatus according to Claim 17, **characterized in that** the carry-along elements (241, 241') are of the widest possible design in dependence on the honeycomb structure of the container (200).

22. Apparatus according to Claim 21, **characterized in that** the carry-along elements (241, 241') are roller-mounted.

## Revendications

1. Procédé pour amener, positionner, stocker et/ou remplacer des conteneurs, dans lequel les conteneurs de réception se présentent sous la forme de conteneurs actifs et de conteneurs vides et dans lequel au moins un conteneur vide est associé à chaque conteneur actif en vue du remplacement, **caractérisé en ce que**, pour recevoir des produits postaux ou analogues, un certain nombre de conteneurs vides sont disposés les uns derrière les autres avec le pas (B) prédéterminé des conteneurs actifs dans un chemin de défilement, les conteneurs vides étant déplacés automatiquement avec le pas (B).

2. Procédé selon la revendication 1, **caractérisé en ce que** de nombreux conteneurs vides, sont remplacés simultanément et aléatoirement « à la volée » par les conteneurs actifs dans une direction transversale par rapport au chemin de défilement.

3. Procédé selon la revendication 2, **caractérisé en ce qu'**un premier conteneur, par exemple un conteneur plein, est immobilisé de façon amovible transversalement au chemin de défilement et, lors du contact avec un deuxième conteneur, par exemple un conteneur vide, il est mis fin à l'immobilisation jusqu'à ce que le deuxième conteneur ait pris la position du premier conteneur.

4. Procédé selon la revendication 3, **caractérisé en ce que** l'immobilisation du deuxième conteneur est réalisée automatiquement en fonction de la longueur du conteneur après le changement de position.

5. Procédé selon la revendication 4, **caractérisé en ce qu'**un dispositif (250) d'entraînement du dispositif de remplacement de conteneurs est déconnecté après qu'un générateur de signal (201) a atteint une position d'extrémité.

6. Procédé selon la revendication 5, **caractérisé en ce que** le dispositif d'entraînement (250) comporte au moins une chaîne (204) et la chaîne (204) n'effectue pas un tour complet en raison de l'agencement de plusieurs poussoirs (241, 241'), de préférence de deux poussoirs, ladite chaîne effectuant de préférence la moitié d'un tour.

7. Procédé selon la revendication 6, **caractérisé en ce que**, lors de la rotation des poussoirs, chaque poussoir (241) pousse un conteneur vide vers un conteneur actif et réalise ainsi le remplacement « à la volée » du conteneur actif contre le conteneur vide sans arrêter le défilement automatique de l'installation de triage de produits postaux.

8. Procédé selon la revendication 7, **caractérisé en ce qu'**au moment du remplacement un autre poussoir (241') tire vers le bas un goujon de fixation par l'intermédiaire d'un élément à bascule (202), et libère de cette façon le conteneur rempli (200') pour l'écarter, et **en ce que** l'autre poussoir (241') libère le goujon de fixation (202) après avoir dépassé l'élément à bascule (203) en vue d'un nouvel arrêt après que le conteneur (200') a dépassé le goujon de fixation (202), l'autre poussoir (241') actionnant un élément de commutation (201).

9. Dispositif pour amener, positionner, stocker et/ou remplacer des conteneurs, dans lequel les conteneurs de réception se présentent sous la forme de conteneurs actifs et de conteneurs vides et dans lequel au moins un conteneur vide est associé à chaque conteneur actif en vue du remplacement, **caractérisé en ce que**, pour recevoir des produits postaux ou analogues, un certain nombre de conteneurs vides sont disposés les uns derrière les autres avec le pas (B) prédéterminé des conteneurs actifs dans un chemin de défilement, les conteneurs vides étant déplaçables automatiquement avec le pas (B).

10. Dispositif selon la revendication 9, **caractérisé en ce qu'**il est prévu au moins une glissière de synchronisation, la glissière de synchronisation étant formée de glissières (100) de longueur limitée qui sont déplacées de façon synchronisée et qui comportent des poussoirs (150, 150', 150''), réglables en hauteur, destinés aux conteneurs.

11. Dispositif selon la revendication 10, **caractérisé en ce que** chaque glissière (100) comporte un nombre prédéterminé de poussoirs réglables (150, 150', 150'') pour le transport d'un nombre correspondant de conteneurs.

12. Dispositif selon la revendication 10, **caractérisé en ce qu'**il est prévu un dispositif d'entraînement, de préférence un moteur pas-à-pas, pour le déplacement sans à-coups de la glissière de synchronisation.

13. dispositif selon la revendication 10, **caractérisé en ce que** les glissières (100) ont une forme ouverte vers le bas et sont guidées horizontalement et latéralement par des rouleaux recouverts par extrusion de matière plastique.

14. Dispositif selon la revendication 10, **caractérisé en ce que** tous les poussoirs (150, 150', 150'') peuvent être commandés séparément et individuellement.

15. Dispositif selon la revendication 10, **caractérisé en ce que** tous les poussoirs (150, 150', 150'') restent en prise lorsque la machine est arrêtée, en cas d'arrêt d'urgence et lorsque l'installation n'est pas alimentée.

16. Dispositif selon la revendication 9, **caractérisé en ce qu'**il est prévu un goujon de fixation (202), réglable en hauteur, pour fixer le conteneur (200, 200',...), lequel goujon de fixation est tiré vers le bas dans un manchon (206) via l'élément à bascule (203) et peut être de nouveau remis en place automatiquement par un autre poussoir (241') via un système à ressort (207) après avoir libéré l'élément à bascule (203).

17. Dispositif selon la revendication 16, **caractérisé en ce qu'**il est prévu une chaîne (204) dotée de poussoirs (241, 241') destinés aux conteneurs (200) en vue du remplacement des conteneurs (200, 200', ...) transversalement au chemin de défilement.

18. Dispositif selon la revendication 17, **caractérisé en ce qu'**il est prévu un seul dispositif d'entraînement (250, 205) destiné au fonctionnement de la chaîne (204) et à l'introduction ainsi qu'à la sortie du goujon de fixation (202).

19. Dispositif selon la revendication 18, **caractérisé en ce qu'**il est prévu un élément de commutation (201) pour la déconnexion du dispositif d'entraînement (250, 205).

20. Dispositif selon la revendication 19, **caractérisé en ce que** le dispositif d'entraînement (250) comporte un motoréducteur (205).

21. Dispositif selon la revendication 17, **caractérisé en ce que** les poussoirs (241, 241') sont conformés pour avoir la plus grande largeur possible en fonction de la structure en nid d'abeilles du conteneur (200).

22. Dispositif selon la revendication 21, **caractérisé en ce que** les poussoirs (241, 241') sont montés sur des rouleaux.
